Europäisches Patentamt

European Patent Office

Office européen des brevets

(11) Publication number: **0 228 114**
**A1**

# (12) EUROPEAN PATENT APPLICATION

(21) Application number: 86202133.4

(51) Int. Cl.⁴: **B60R 22/36**

(22) Date of filing: 15.04.83

(30) Priority: 20.04.82 GB 8211348
02.12.82 GB 8234429

(43) Date of publication of application:
08.07.87 Bulletin 87/28

(60) Publication number of the earlier application in accordance with Art.76 EPC: 0 092 407

(84) Designated Contracting States:
AT BE DE FR GB IT NL SE

(71) Applicant: ASE (UK) LIMITED
Norfolk Street
Carlisle Cumbria CA2 5HX(GB)

(72) Inventor: Anderson, Alexander Barrie
Westwoodside Wigton
Cumbria CA7 0LW(GB)
Inventor: Patterson, Michael
22 Currock Road Carlisle
Cumbria CA2 4BB(GB)

(74) Representative: Ackroyd, Robert et al
POLLAK MERCER & TENCH High Holborn
House 52-54 High Holborn
London WC1V 6RY(GB)

(54) **Emergency locking vehicle seat belt retractor.**

(57) Each retractor described includes a belt-sensitive (355,360) and a retractor-sensitive (414) inertial device. The retractor is locked by engagement of a lockbar with ratchet teeth (325) of a belt spool (320). The lockbar is actuated by rotation of a lockcup - (340) which is produced by coupling of the lockcup to the spool. The coupling is by engagement of a pawl member (420) of the retractor-sensitive device, which is mounted on a side arm (412) of the lockcup, with ratchet teeth (331), or by engagement of a latchlock (360) acutated by relative rotation between the flywheel (355) and the spool member with internal ratchet teeth of the lockcup. Latchlock actuation is by a camming arrangement or by co-operation of a pin (390) in a slot (394). The retractor-sensitive inertial device is supported on a seating (428) which is a snap-fit on the arm of the lockcup in two or more different orientations selected according to the intended orientation of the retractor in use. Flexural resilient elements e.g. a rectilinear wire (400) and integral parts (420,426) of a plastics lockcup moulding bias parts of the retractors into their normal positions.

FIG.8.

## EMERGENCY LOCKING VEHICLE SEAT BELT RETRACTOR

The invention relates to emergency locking vehicle seat belt retractors.

Such retractors commonly comprise belt storage means, from which a belt can be withdrawn for use against a pull imposed by a retractor spring means, and an emergency locking mechanism which will lock the retractor against belt withdrawal in response to at least one of a predetermined belt acceleration in the withdrawal direction and a predetermined acceleration, which term is employed here to comprehend also deceleration, of the retractor. Known retractors of this kind tend to include a large number of small parts which must operate with great reliability and this presents manufacturing and assembly problems. Retractors must also be provided to meet specific requirements, for example, the locking mechanism may be required to be responsive to belt acceleration only, retractor acceleration only, or to both. It may also be required to mount the retractors in different orientations in a vehicle, for example for front and for rear seat use. Locking under emergency conditions must be effected not only reliably but also promptly, that is without withdrawal of a great length of the belt.

According to the present invention there is provided a vehicle seat belt retractor comprising a frame journalling a spool member from which the belt can be unwound for use against the pull of a retractor spring, and a locking device for locking the spool member against rotation in the belt unwinding direction, the locking device comprising an operating member rotatable on the spool member axis to effect locking, the operating member carrying an inertial device responsive to a predetermined acceleration of the retractor to effect said rotation of the operating member by application thereto of rotational movement of the spool member.

The inertial device may have an output member moveable in response to the predetermined acceleration to engage the spool member to thereby couple the operating and spool members together to effect said rotation of the operating member.

Conveniently, the output member comprises an arm pivoted for engagement of a free end portion thereof with ratchet teeth of the spool member.

In this way the rotation of the operating member is effected by direct coupling of the operating and spool members. However, the coupling may be indirect, for example if the retractor is responsive to belt acceleration and has an inertial mass arranged to rotate with the spool member below a predetermined acceleration thereof and to lag relative to the spool member at the predetermined rotational acceleration and thereby effect said rotation of the operating member, the inertial device may have an output member movable in response to the predetermined retractor acceleration to cause the inertial mass to lag relative to the spool member.

Preferably, the locking device of the retractor comprises a lockbar movable to engage a ratchet wheel portion of the spool member by said rotation of the operating member, the lockbar being engaged by an integrally formed spring portion of the operating member, for example a spring portion of a plastics moulding.

A retractor according to the present invention can have fewer parts than known retractors. Manufacture and assembly can therefore be simplified and operation made more reliable. The retractor can be made so as to be retractor acceleration sensitive only, or can be sensitive only, or can be sensitive to belt acceleration also by inclusion of appropriate parts.

Conveniently, the inertial device of a retractor according to the invention has an inertial weight normally supported in a rest position on a support and movable from the rest position to move the output member in response to the predetermined retractor acceleration, the support and the operating member being arranged to be connected together in a selected one of a plurality of positions whereby the inertial weight can be normally supported by the support in its rest position in a plurality of different orientations of the frame.

In this way, the invention can provide a retractor which, by selection of the support position of the inertial weight, can be made suitable for mounting in an orientation appropriate to a particular vehicle.

Advantageously, the support is adjustable around an axis transverse to the spool member axis.

Known vehicle seat belt retractors often include a number of coiled compression or tension springs. These lead to difficulties in assembly and to unreliable operation, in particular to variations in the acceleration thereshold at which the retractor locks.

With a view to overcoming these disadvantages, the invention also provides a vehicle seat belt retractor comprising a frame journalling a spool member from which the belt can be unwound for use against the pull of a retractor spring and a locking device operative to lock the spool member against rotation in the belt unwinding direction by relative movement of parts of the retractor in response to a predetermined condition, said movement of the parts being opposed by a flexural spring element.

The flexural spring element may comprise a generally rectilinear spring wire or, alternatively, the element may be a portion of the operating member formed integrally with the operating member, for example as a one-piece moulding of plastics material.

The relatively movable parts of the retractor may be the retractor frame and an operating member rotationally movable about the spool member axis to render the locking device operative. Alternatively, or additionally, the parts may comprise the spool member and an inertial mass arranged normally to rotate with the spool member and to lag on the spool member in response to a predetermined belt withdrawal acceleration.

Also with a view to reducing the number of parts comprised in a retractor, improving its reliability in operation and facilitating its assembly the invention also provides a vehicle seat belt retractor comprising a frame journalling a spool member, from which a belt can be unwound for use against the pull of a retractor spring, and locking device operative to lock the spool member against rotation in the belt unwinding direction, the locking device comprising an inertial mass normally rotatable with the spool member and arranged to lag with predetermined belt unwinding acceleration, a latchlock pivotally mounted on one of the inertial mass and the spool member and having a tooth portion, and co-operating formations on the latchlock and the other of the inertial mass and the spool member operative to pivot the latchlock outwardly when the inertial mass lags with respect to the spool member to engage the tooth portion with ratchet teeth surrounding the latchlock to thereby render the locking device operative. Preferably, the latchock is pivotally mounted at one end thereof and has a tooth portion at the other end, the co-operating formations comprising pin and slot means operative between the latchlock and other of the inertial mass and the spool member.

The locking device of this retractor includes fewer parts than that of known retractors and simplifies the mechanism of the retractor.

Conveniently, the latchlock is pivoted on a pivot pin of the spool member and the inertial mass is driven by the spool member by means of a flexural spring element carried by the inertial mass and engaging the pivot pin. The flexural spring advantageously comprises a generally straight wire having an end thereof secured to the inertial mass.

The features and aspects of the present invention mentioned hereinbefore may of course be employed in any desired combination in vehicle seat belt retractors according to the invention.

Embodiments of the invention will now be described by way of example with reference to the drawings, in which:

Figures I, 2 and 3 together show in exploded form a first retractor embodying the invention,

Figures 4 and 5 are fragmentary views of parts of the retractor of figures I, 2 and 3,

Figure 6 is a schematic end view of a second retractor embodying the invention,

Figure 7 is an exploded perspective view of a third retractor embodying the invention,

Figure 8 is an exploded perspective view of part of a fourth retractor embodying the invention,

Figure 9 is a side view of the retractor parts shown in Figure 8 assembled, and

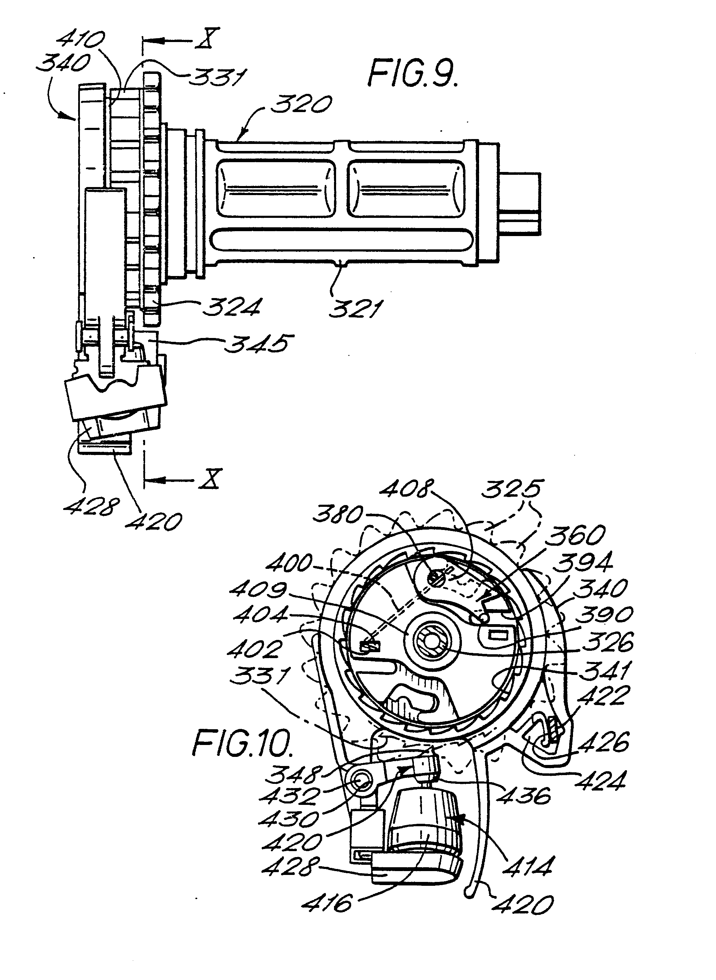

Figure I0 is a part-sectional view along the line X-X of Figure 9

The retractor of figures I to 5 has a housing comprising a cover member I and side wall members 2, 3 all conveniently moulded in suitable plastics materials. The cover member I has a curved outer wall portion 4 and side wall portions, of which only side wall portion 5 is seen, spaced inwardly from the adjacent side edges of the cover member. The side wall portions incorporate integral bushes 6 having outwardly turned lips 8 at their inner ends.

A rigid metal frame I0 comprises a centre web II connecting two side webs I2 shaped to match the shape of the cover member side wall portions and having aligned apertures I4. The resilience of the cover member I allows the frame I0 to be assembled with it by reception of the bushes 6 through the frame side web apertures I4, the outer faces of the lips 8 engaging the inner faces of these side webs. The cover member I and the centre web II then have aligned apertures I5 and I6 for receiving an anchorage bolt (not shown) by means of which the retractor is mounted in a vehicle.

The cover member I and the frame I0 journal a spool 20 in the bushes 6. The spool 20 is integrally formed, as by die-casting, and has an axially slotted spindle portion 2I having at one end an axially slotted stub shaft 22 of smaller diameter, and at the other end a ratchet wheel portion 24 of larger diameter with ratchet teeth 25. A smaller diameter stub shaft 26 extends axially outwardly from the ratchet wheel portion 24.

The spool 20 is assembled into the frame by being axially moved through the bushes 6, until the ratchet wheel portion 24 engages the lip 8. The spool 20 is held in the assembled position by a circlip 28 which engages a groove in the spindle portion 2I on the inner side of the side web I2 adjacent the ratchet wheel portion 24.

The housing side wall member 2 and the adjacent cover member side wall portion receive between them a retractor spring 30, the inner end of which is received in the slot in the stub shaft 22 and the outer end of which is provided with a cutout portion by which it is held by a co-operating formation on the side wall member 2. Both side wall members 2,3 are assembled with the cover member I by means of projecting tongues 32 received in slots 34 in the curved wall portion 4, assembly being effected by virtue of the resilience of the housing parts. The side wall member 2 containing the spring 30 is secured in the assembled condition by a screw 3I extending through it to a tapped recess in the cover member I. The belt can be assembled with the spool 20 by being pushed through a guide slot (not shown) in the cover member into the axial slot in the spindle portion 2I and retained by a webbing pin 35.

The space between the cover side wall portion 5 shown and the side wall member 3 receives vehicle and belt acceleration inertial sensing mechanisms, and a lock mechanism responsive to them to lock the spool 20 against rotation relative to the frame I0 in the belt unwinding direction.

The lock mechanism includes the ratchet wheel portion 24 and an operating member in the form of a lockcup 40, with internal ratchet teeth 4I, the floor of which is centrally apertured so as to be freely journalled on the stub shaft 26. An arm 42 extends laterally from the rim of the lockcup 40 and has a cam slot 43 for co-operation with a follower pin 44 projecting from a lockbar 45 having a tooth portion 48 engageable with the teeth 25 of the spool ratchet wheel portion 24 to prevent spool rotation in the belt unwinding unwinding direction. The lockbar 45 has a shaft portion 49 between the tooth portion 48 and a stop portion 50. An aperture 5I in the adjacent frame side webb I2 has an end portion through which the stop portion 50 can be received during assembly, the shaft portion 49 then being trapped within a narrower portion of the aperture 5I.

A spring 52 received around the stub shaft 26 has one end acting on the frame I0 and the other on the lockcup 40, to urge the lockcup into an angular position defined by reception of the pin 44 at one end of the slot 43 shown in solid line in Figure 4. The lockbar 45 then has the tooth portion 48 spaced from the teeth 25. Rotation of the lockcup 40 against the spring 52 in the anti-clockwise direction as shown in Figure 4 brings the pin 44 to the other end of the slot 43, to the position shown in broken line, turning the lockbar 45 so that the tooth portion 48 engages the teeth 25.

The belt acceleration responsive inertial sensing device is received within the lockcup 40, between its floor and the ratchet wheel portion 24.

This device comprises an inertial mass in the form of a disc 55 which is centrally apertured and journalled on the stub shaft 26. The disc 55 is however connected to the stub shaft 26 by means of an elongate calibration spring 56 formed by a flexural spring element which is formed from a length of wire received through a transverse aperture in the stub shaft 26. The spring element 56 engages the disc 55 by means of two diametrically opposed lugs 58 on the outer face of the disc. The disc 55 can thus rotate to a limited extent relative to the stub shaft 26, against the force of the calibration spring 56.

The device also includes a latchlock 60 having the form of a generally right angled two-armed lever. The free end of one arm is formed as a tooth 6I for engagement with the internal ratchet teeth 4I of the lockcup 40 and the free end of the other has an aperture 62 to receive the the stub shaft 26 therethrough. At the joint of the two arms, an aperture 64 is provided by which the latchlock 60 is pivoted on a pin 65 projecting axially from the outer side of the ratchet wheel portion 24. This means of mounting the latchlock 60 ensures correct phasing of the internal sensing and locking mechanisms. The aperture 62 is elongate to permit tilting of the latchlock about the pin 65 and is surrounded by a raised rim 66, which provides a bearing face for the disc 55, to reduce friction and noise. As shown in Figure 5, a cam face 53 is provided by a recess formed at the periphery of the inner face of the disc 55 for acting on a follower face 63 on the latchlock 60 to pivot this outwardly about the pin 65 into engagement with the internal ratchet teeth 4I when the disc 55 lags relative to the ratchet wheel 24.

In a modification of the retractor illustrated the latchlock 60 is pivotally mounted on the disc 55 and has a cam follower face acting on a cam face formed on the ratchet wheel portion 24.

When the belt is withdrawn from the spool at normal rates, the spool rotation is sufficiently slow for the disc 55 to maintain its angular relationship with the spool, so that the relationship between the disc face and the latchlock 60 is such that the latchlock tooth portion 6I is spaced from the internal ratchet teeth 4I of the lockcup 40. However, if the belt is withdrawn at a very high rate, such as would be experienced in an emergency when the belt is required to maintain the user in his seat, the resulting spool rotation rate is such that the disc 55 cannot follow and lags on the spool against the force of the calibration spring 56. The cam face 53 then immediately causes the latch lock tooth portion 6I to engage the internal ratchet teeth 4I of the lockcup 40, which has previously been held stationary on the spool by the spring 52. The lockcup 40 is now connected through the latchlock 60 with the spool rotation, so that it itself rotates so as to cause the tooth portion 48 of the lockbar 45 to engage with the teeth 25 of the ratchet wheel portion 24 of the spool and thereby lock this to the frame against further rotation. When this emergency acceleration ceases, the spring 52 acts to restore the lockcup 40 and the lockbar 45 to their normal inoperative positions, and the spring 56 causes the disc 55 to resume its original angular orientation with respect to the spool, so that normal operation can be resumed.

The lockcup 40, together with belt acceleration sensitive mechanism, is retained on the stub shaft 26 by means of a small circlip 68 received in a groove adjacent the end of the stub shaft.

The locking mechanism of the illustrated retractor is responsive also to acceleration of the retractor beyond a predetermined amount, and thus acceleration of the vehicle in which the retractor is mounted. The mechanism includes a retractor acceleration sensitive device comprising a support 70 on which rests a cup 71 receiving an upstanding pin 72 on the upper end of which rests a hollow inertial weight 74. The support 70 pivotally mounts a second lever 75 which rests on the inertial weight 74 between the pivot postion and a toothed free end 76.

The support 70 is clipped to the lockup arm 42, by means of a slot 77 provided in the arm, and when the inertial weight 74 tilts in response to a predetermined retractor acceleration, the lever 75 pivots to engage the toothed end 76 with the teeth 25 of the ratchet wheel portion 24 through an aperture 78 in the cylindrical wall portion of the lockcup. The reel will be rotating at this time because the retractor acceleration acting on the inertial mass 74 will cause the wearer of the belt to move forward in his seat and thus withdraw belt from the reel. Consequently, the lockcup 40 is carried round with the reel through the coupling effected by the lever 75. This movement of the lockcup 40 effects locking of the retractor against belt withdrawal in just the same way as does the like roatation of the lockup consequent upon its being linked to the reel by the latchlock 60.

The retractor acceleration sensing device this acts independently of the belt acceleration sensing device and it will be noted that the illustrated retractor can be readily made up by appropriate selection or omission of parts as one responsive to only belt acceleration, only retractor acceleration, or both.

If preferred, the retractor can be readily modified so that the retractor sensitive device acts through the belt sensitive device instead of independently. This, disc 55 can be provided with external ratchet teeth and the lever 75 can be arranged to engage the toothed end 76 with these teeth, so as to slow the disc against rotation with the spool and effect locking in the same way as if the disc had lagged relative to the spool under its own inertia.

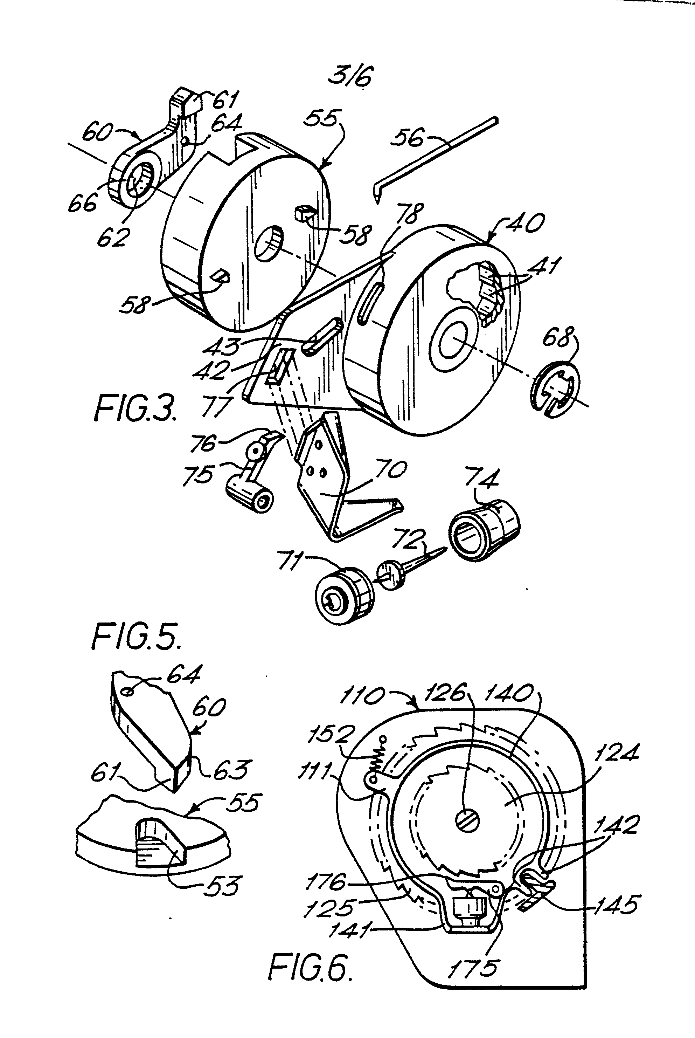

The second modified form of retractor shown in Figure 6 comprises a frame journalling in its side webs a spool with an integral ratchet wheel portion 124, or with a ratchet wheel fixed thereto. A lockbar 145 is pivoted in apertures in the side webs of the frame between positions of engagement with a second ratchet wheel portion 125 integral with or attached to the spool to prevent belt withdrawal, and a normal position spaced away from the ratchet wheel portion teeth. The lockbar 145 is operated by a lockcup 140 carried for rotation on an extension 126 of the spool and having radially outwardly projecting arms 142 between which an extension of the lockbar 145 is received. The lockcup 140 also has an extension portion 141 below, within which is enclosed an inertial sensing device responsive to retractor acceleration. This device comprises a tilting weight assembly similar to the assembly 71, 72, 74 shown in Figure 3. Again, the consequence of tilting of the weight in response to a predetermined retractor acceleration is that a lever 175 pivoted on the lockcup extension portion is pivoted so that its free end which has the form of a tooth 176, is brought into engagement with the teeth of the ratchet wheel portion 124 within the lockcup.

As soon as engagement of the lever 175 with the teeth of the ratchet portion 124 has been effected, the lockcup 140 is coupled with the spool, so that rotation of the latter in the (anti-clockwise) belt unwinding direction results in similar movement of the lockcup; as a consequence, the lockbar 145 is brought from its disengaged to its engaged locking position. This movement of the lockcup 140 is opposed by a return spring 152 extending between the frame 110 and a radially extending portion 111 of the lockcup.

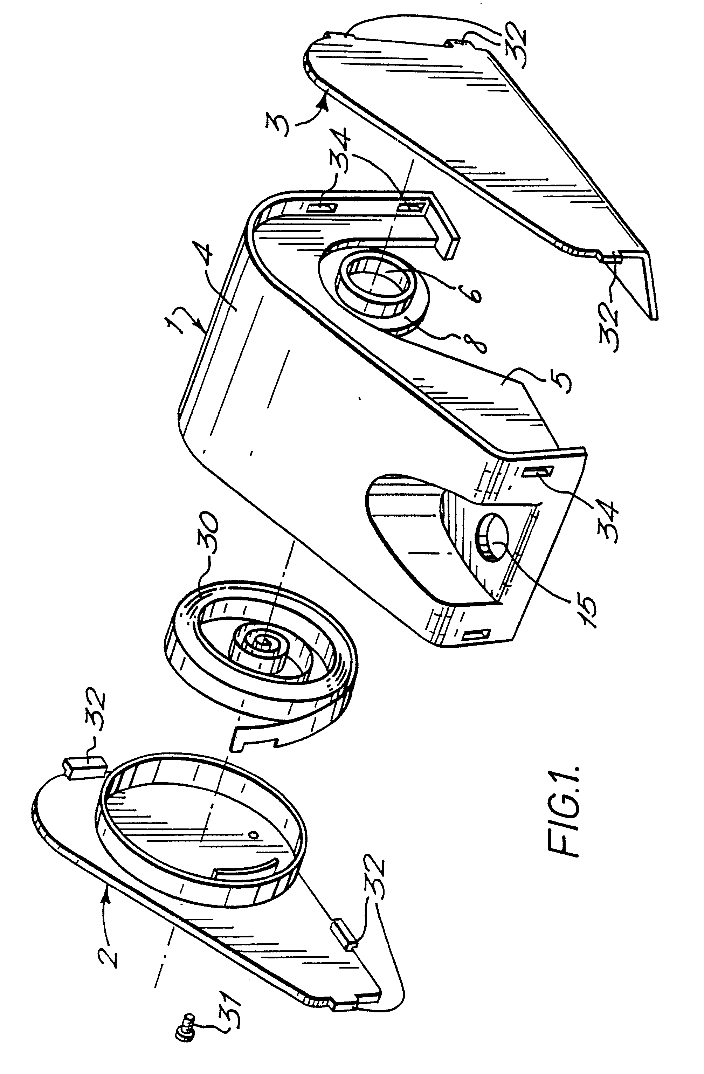

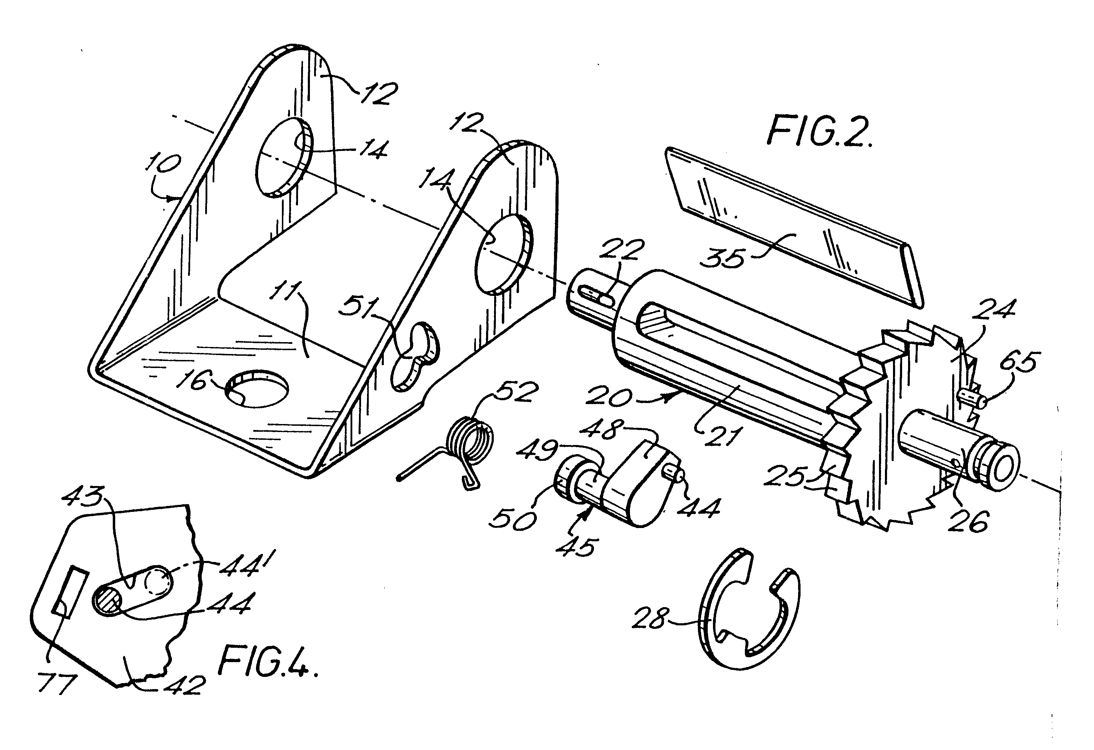

The retractor of Figure 6 will be understood to be responsive only to retractor acceleration, but the lockcup 140 can enclose a belt acceleration sensitive device, which can correspond to that shown in Figures 1 to 4, either in addition to the ratchet wheel portion 124, in which event the lockcup 140 is provided with internal teeth and is rotated by the belt acceleration sensitive device independently of the retractor sensitive device, or with the modification that the lever 175 engages teeth provided on the inertial disc 55, so that the retractor sensitive device works through the belt responsive device.

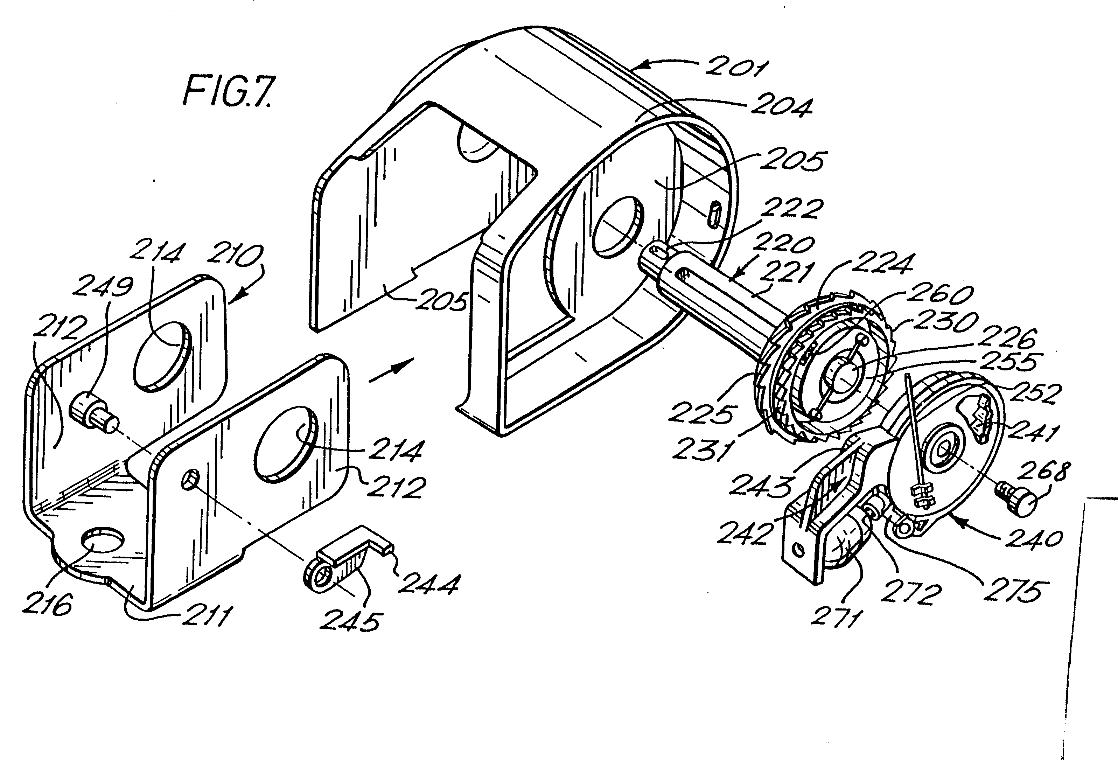

The retractor shown in Figure 7 has a cover member 201 and a rigid metal frame 210. These are generally similar to the cover 1 and frame 10 of the retractor shown in Figures 1 to 5. Accordingly, the cover 201 and frame 210 will not be described in detail, their parts corresponding to parts of the cover 1 and frame 10 of the retractor of Figures 1 to 5 being indicated in Figure 7 by reference numerals which are greater than the corresponding reference numerals of Figures 1 to 5 by 200. It should be noted that the side wall members and retractor spring of the retractor have been omitted from Figure 7.

The illustrated retractor includes a spool 220, which has an axially slotted spindle portion 221 and an axially slotted stub shaft 222 of smaller diameter for receiving the retractor spring. The opposite end of the spool assembly 220 is formed integrally with a ratchet wheel 224 having ratchet teeth 225. The outer end face of the rachet wheel 224 is formed integrally with, or alternatively has attached, a coaxial cylindrical wall 230 having ratchet teeth 231 on its outer surface.

A stub shaft 226 of the spool assembly 220 extending beyond the ratchet wheel 224 journals a lockcup 240 which is secured for free rotation on the stub shaft 226 by a screw 268, the cylindrical wall 230 lying radially outwardly of the cylindrical wall of the lockcup 240.

In contrast to the lockcup 40 of the retractor of Figures 1 to 5, the lockcup 240 has a cam surface 243 on its laterally extending arm 242. The cam surface 243 is in contact with a follower surface of a lockbar 245 which is pivotally mounted through an aperture through one side wall 212 of the frame 210 by means of a pivot pin 249.

The lockcup 240 is urged into a postion in which a tooth portion 248 of the lockbar 245 is spaced from the ratchet teeth 225 by a rectilinear flexural return spring 252 which is formed from a length of w:re and is secured to the outer face of the lockcup 240 at one end and to the frame 210 at the other.

The lockcup 240 is integrally formed with its laterally extending arm 242 which supports a retractor acceleration sensitive device which includes a cup 271, an upstanding pin 272 and a hollow inertial weight 274. The acceleration sensitive device also includes a lever 275 which rests on the pin 272 and has a toothed end (not shown) which can pivot on the arm 242 of the cylindrical wall 230.

The lockcup 240 has internal ratchet teeth 241 and houses a belt acceleration responsive inertial sensing device which includes an inertial mass 255, a latchlock 260 pivotally mounted on the outer face of the ratchet wheel 224 and other parts corresponding to parts of the retractor shown in Figures 1 to 5. The latchlock 260 operates to engage the internal ratchet teeth of the lockcup 240 by movement outwardly of the spool axis.

The belt acceleration sensitive device of the retractor of Figure 7 functions in the same way as the device of the retractor of Figures 1 to 5 to couple the spool 220 to the lockcup 240. Thus, under emergency acceleration the lockcup 240 rotates with the spool 220 and the cam surface 243 formed on the support arm 242 contacting the follower surface 244 of the lockbar causes the lockbar to pivot and its tooth portion 248 to engage the rachet teeth 225 of the ratchet wheel 224. When the acceleration ceases, the lockcup 240 returns, under the influence of the return spring 252, to its angular position in which the tooth portion 248 does not engage the ratchet teeth 225.

The retractor acceleration sensitive assembly 271, 272, 274, 275, functions similarly to the assembly 71, 72, 74, 75, 76 of the retractor of Figures 1 to 5 except that in the retractor of Figure 7 the toothed end of the lever 275 engages the ratchet teeth 231 of the cylindrical wall 230 to couple the lockcup 240 to the spool 220 when a retractor acceleration above a predetermined amount causes tilting of the pin 272 to operate the lever 275.

By way of further modification, the return spring 252 can be formed integrally with the lockcup 240.

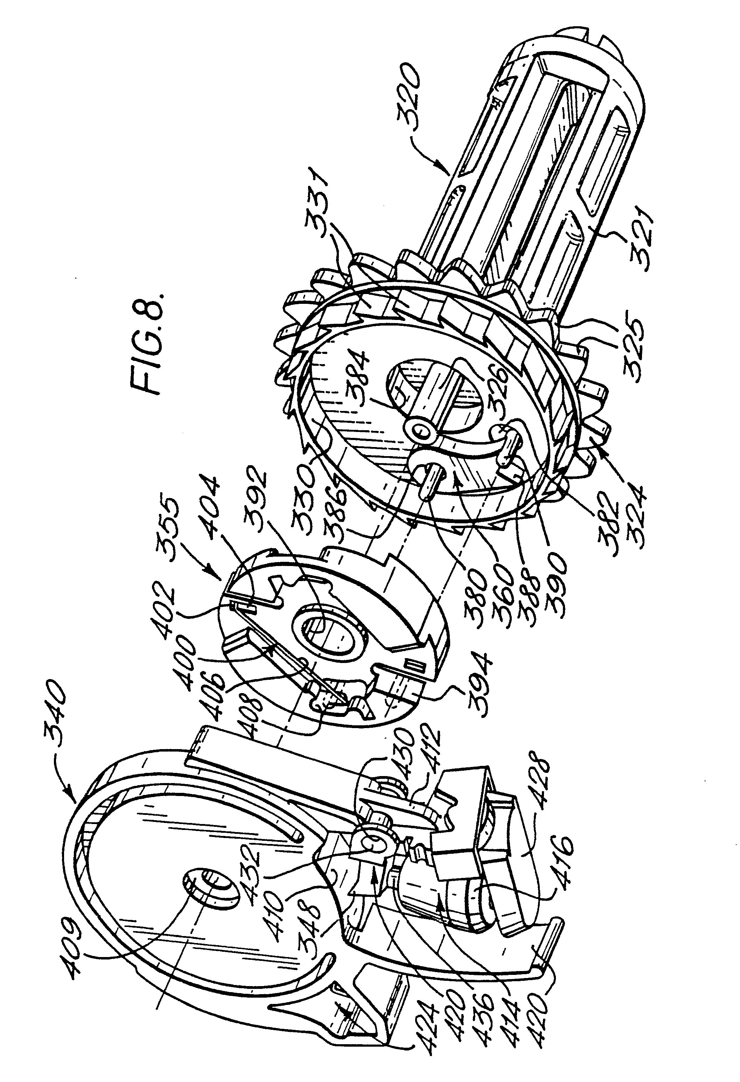

Figures 8 to 10 show a spool member 320, a lockcup 340, an inertial mass 355 and other parts of a fourth vehicle seat belt retractor according to the invention. For simplicity, certain parts of the retractor including its frame, its cover and its retractor spring are not shown in Figures 8 to 10. These and the other parts not shown are similar to the equivalent parts illustrated in Figures 1 to 3.

The spool member 320 has a spindle portion 321, to which a seat belt is secured, and carries a ratchet wheel 324 having teeth 325 which are engaged by a lockbar 345 (Figure 10) to lock the spool member 320 to the retractor frame. The end of the spool member 320 beyond the ratchet wheel 324 is formed with a central stub shaft 326 and, coaxial with the stub shaft 326, a cylindrical wall 330 having ratchet teeth 331 on its outer surface. Within the wall 330 the spool member 320 is formed with a pin 380 extending parallel to the axis of the shaft portion 321 and a circular recess 382 angularly spaced from the pin 380. A further circular recess 384 extends concentrically around the stub shaft 326.

A latchlock 360 is moulded from plastics material and has at one of its ends an aperture 386 which receives a larger decimeter base portion of the pin 380 to mount the latchlock 360 for pivotal movement relative to the circular end face of the ratchet wheel 324. The opposite end of the latchlock 360 is formed into a pawl portion 388 which lies outwardly of an integral pin portion 390 of the latchlock,one end of which is received in the recess 382. The cylindrical wall of the recess 382 abuts the pin 390 to limit the pivotal movement of the latchlock 360 on the pin 380.

The inertial mass 355 has a central aperture 392 of greater diameter than the external diameter of the stub shaft 326 of the spool member 320. The mass 355 has a slot 394 which extends inwardly from the periphery of the mass and receives the other end of the integral pin 390 of the latchlock 360. Rotation of the mass 355 relative to the spool member 320 and results in co-operation between the pin 390 and the walls of the slot 394 to cause the pawl portion 388 of the latchlock to move towards or away from the axis of the spool member 320 in accordance with the direction of relative rotation. Relative rotation of the inertial mass 355 and the ratchet wheel 334 in a direction which results in outward movement of the pawl portion 388 is opposed by a flexural spring element in the form of a spring wire 400 which has a short cranked end portion 402 anchored in an aperture 404 in the mass 355 and a substantially rectilinear portion 406 which abuts the pin 380 of the spool member 320, a slot 408 in the mass 355 receiving the pin 380.

The stub shaft 326 of the spool member 320 journals the lockcup 340 which is a one-piece plastics moulding and has a central box 409 which is received in the recess 384. The boss 409 is itself apertured centrally to receive the stub shaft 326 and has an outer cylindrical surface on which the mass 355 rotates. The lockcup 340 is secured to the spool member 320 by a screw (not shown) received in the end of the stub shaft 326. A cylindrical wall 410 of the lockcup 340 lies radially inwardly of the cylindrical wall 330 of the spool member 320 and has internal ratchet teeth 341 which are engaged by the pawl portion 388 of the latchlock 360 upon outward movement of the latchlock. In this way, the lockcup is locked to the spool member 320 when the spool member is subjected to an angular acceleration in the belt-unwinding direction which is equal to or greater than a threshold acceleration determined by the bias of the flexural spring element 400.

A laterally-extending arm 412 of the lockcup 340 carries an inertial device 414 which is similar to the inertial device 71, 72, 74 of the retractor of Figures 1 to 3. Acceleration or deceleration of the retractor beyond a threshold valve results in movement of an inertial weight 416 of the device to cause a pin to pivot a pawl member 420 to engage the external ratchet teeth 331 of the cylindrical wall 330. This acceleration or deceleration also results in the lockcup becoming locked to the spool member 320 for rotation therewith in the belt unwinding direction.

The lockcup 340 is formed with an integral flexural biassing element in the form of a flexible tongue 420. The outer end of the tongue 420 abuts a stop (not shown) on the retractor frame and biassed the lockup 340 against rotational movement in the direction which results in locking of the spool member 320 to the retractor frame. This locking is effected by the lockbar 345 (Figure 10) which is similar to the lockbar 45 shown in Figure 3. The lockbar 345 has a pawl portion 348 which, upon pivoting of the lockbar on the retractor frame, engages the teeth 325 of the ratchet wheel 324 to lock the spool member 320 to the frame. The lockbar is connected to the lockcup 340 by reception of a protruding tab 422 on the lockbar 345 in an aperture 424 which is formed as part of the one-piece lockcup moulding. The aperture 424 contains a further integral spring element 426, moulded with the remainder of the lockcup, which biasses the tab 422 against an inner wall of the aperture 424.

The inertial device 414 is mounted on the arm 412 by way of a seating 428 which determines the orientation of the inertial device relative to the frame of the retractor. The arm 412 and seating 428 are a snap fit together and the arm is shaped so that the seating can be fitted to the arm in a selected one of two or more relative positions of the seating and arm. In this way the use of separate screws or other securing elements is avoided and the retractor can be adapted for use in a selected one of two or more orientations, for example in the left-or right-hand side or in the front or rear of a vehicle.

In the embodiment of Figures 8 to 10, the seating 428 is adjustable about an axis which extends transversely of the axis of the spool member 320. In the particular case of this embodiment, the rest position of the inertial device 414 can be selected so that the longitudinal axis of the pin of the device lies along one of two lines lying in a plane which also contains the axis of the spool member 320. In the two positions, the longitudinal axis of the pin makes an angle of 15° to opposite sides of a line lying in the said plane and extending perpendicularly to the axis of the spool member 320. In other embodiments of the invention, other angles and planes of orientation of the inertial device, and therefore axes about which the seating for the inertial device is adjustable, are of course possible.

The pawl member 420 is moulded from plastics material and is pivotally mounted on the arm 412 by reception of circular apertures 430 in the limbs of a U-shaped portion on corresponding cylindrical protrusions 432 one on each side of the arm 412. The pawl portion 348 of the pawl member 420 is engageable with the ratchet teeth 331. The pawl member is connected to the inertial weight 416 by a cup portion 436 which receives the pin of the inertial device 414. The pawl member 420 is shaped so that the cup portion 436 is offset from the pawl portion 348 by an angle appropriate to the orientation in which the retractor is to be used, the pawl member being readily demounted from the arm 412 for substitution of a replacement pawl member having a different offset angle when it is desired to change the orientation in which the retractor is to be used.

The belt-sensitive locking mechanism of the retractor of Figures 8 to 10 functions similarly to the retractor of Figure 7. Upon incidence of belt acceleration in the unwinding direction of or above a threshold valve, the latchlock 360 engages the internal ratchet teeth of the lockcup 340 and the latter thus rotates with the spool member 320. This rotation causes pivoting of the lockbar 345 and the pawl portion 348 of the lockbar engages the teeth 325 of the ratchet wheel 324 to lock the spool member to the retractor frame. When the acceleration ceases, the lockcup returns under the influence of the resilient tongue 420 to a position in which the ratchet wheel 324 can rotate freely.

The retractor-sensitive locking mechanism is similar to those described hereinbefore. Tilting of the inertial weight 416 under influence of an acceleration or deceleration equal to or exceeding a threshold valve causes the pawl portion 348 of the pawl member 420 to engage the ratchet teeth 331 and cause the lockcup 340 to rotate with the spool member 320. Locking of the spool member 320 to the retractor frame as described above results.

As with the retractors described hereinbefore, the retractor of Figures 8 to 10 can be modified so that the retractor-sensitive inertial device is operative to retard rotation of the inertial mass of the belt-sensitive device and therefore effect locking of the retractor by working through the belt-sensitive device.

By way of further modification, the latch lock 360 can be pivotally mounted on the inertial mass and be moved into its position of engagement with the ratchet teeth of the lockcup 340 by the action of co-operating formations, such as a pin and slot or camming arrangement, on itself and the spool member 342.

## Claims

1. A vehicle seat belt retractor comprising frame means journalling a spool member from which the belt can be unwound for use against the pull of a retractor spring, and a locking mechanism for locking the spool member against rotation in the belt unwinding direction, the locking mechanism comprising an inertial mass arranged normally to rotate with the spool member and, in response to a predetermined belt withdrawal acceleration, to move relative to the spool member to a position in which it lags relative to the spool member, the locking mechanism including a latch which is pivotably mounted on one of the spool member and the inertial mass and has a projection which is received in an aperture in the other of the spool and the inertial mass, the projection and aperture being arranged such that the latch, upon the lagging of the inertial mass, pivots outwardly to engage ratchet teeth on an operating member of the locking mechanism and effect rotation of the operating member and locking of the retractor, the aperture in the spool or inertial mass comprising a recess extending to the periphery of the spool or mass.

2. A vehicle seat belt retractor according to claim 1, wherein the ratchet teeth are internal teeth of an operating member rotatable against a spring bias to engage a locking pawl with ratchet teeth of the spool member.

3. A vehicle seat belt retractor according to claim 1 or 2, wherein the operating member carries an inertial device responsive to a predetermined retractor acceleration to effect said rotation of the operating member.

4. A vehicle seat belt retractor according to claim 2 or 3, wherein the projection comprises a protruding pin and the recess a slot.

FIG.1.

FIG.2.

FIG.4.

3/6

FIG.3.

FIG.5.

FIG.6.

FIG.7.

0 228 114

FIG.8.

FIG.9.

FIG.10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 071 993 (REPA FEINSTANZWERK) <br> * figure 5 * | 1 | B 60 R 22/36 |
| A | US-A-4 168 810 (J.J. SACK et al.) <br> * figure 1 * | 1 | |
| A | US-A-4 190 213 (T. UEDA) <br> * figure 1 * | 1 | |

| | | | TECHNICAL FIELDS SEARCHED (Int. Cl.4) |
|---|---|---|---|
| | | | B 60 R 22/00 |

The present search report has been drawn up for all claims

| Place of search | Date of completion of the search | Examiner |
|---|---|---|
| BERLIN | 09-03-1987 | BECKER W D H |